Europäisches Patentamt

European Patent Office

Office européen des brevets

(19)

(11) **EP 1 163 555 B1**

(12) **EUROPÄISCHE PATENTSCHRIFT**

(45) Veröffentlichungstag und Bekanntmachung des Hinweises auf die Patenterteilung:
**11.09.2002 Patentblatt 2002/37**

(21) Anmeldenummer: **00926753.5**

(22) Anmeldetag: **23.03.2000**

(51) Int Cl.⁷: $G05B\ 13/02$, $G05B\ 23/02$

(86) Internationale Anmeldenummer:
**PCT/EP00/02581**

(87) Internationale Veröffentlichungsnummer:
**WO 00/058797 (05.10.2000 Gazette 2000/40)**

(54) **VERFAHREN UND VORRICHTUNG ZUR ÜBERWACHUNG UND REGELUNG VON GERÄTEN UND ANLAGEN MIT EINEM ZWEI- ODER MEHRDIMENSIONALEN BETRIEBSBEREICH**

METHOD AND DEVICE FOR MONITORING AND CONTROLLING APPLIANCES AND INSTALLATIONS WITH A BI- OR MULTIFUNCTIONAL OPERATING RANGE

PROCEDE ET DISPOSITIF DE CONTROLE ET DE REGULATION D'APPAREILS ET D'INSTALLATIONS PRESENTANT UN DOMAINE DE FONCTIONNEMENT BI- OU MULTIDIMENSIONNEL

(84) Benannte Vertragsstaaten:
**AT BE CH CY DE DK ES FI FR GB GR IE IT LI LU MC NL PT SE**

(30) Priorität: **25.03.1999 DE 19913662**

(43) Veröffentlichungstag der Anmeldung:
**19.12.2001 Patentblatt 2001/51**

(73) Patentinhaber: **Wingas GmbH
34199 Kassel (DE)**

(72) Erfinder:
• **OSTROMUHOV, Leonid
D-34121 Kassel (DE)**
• **HUIJNK, Jan
NL-6543 XP Nymegen (NL)**
• **BAUER, Herbert
D-34128 Kassel (DE)**

(74) Vertreter: **Isenbruck, Günter, Dr. et al
Patent- und Rechtsanwälte,
Bardehle-Pagenberg-Dost-Altenburg-Geissler-Isenbruck
Theodor-Heuss-Anlage 12
68165 Mannheim (DE)**

(56) Entgegenhaltungen:
US-A- 3 994 623     US-A- 5 084 825
US-A- 5 570 838     US-A- 5 699 267

EP 1 163 555 B1

## Beschreibung

Die Erfindung betrifft ein Verfahren und eine Vorrichtung zur Überwachung und Regelung eines Gerätes oder einer aus mehreren Geräten bestehenden Anlage mit einem zwei- oder mehrdimensionalen Betriebsbereich, dessen Grenzen unterschiedlich technische, verfahrenstechnische, wirtschaftliche oder vertragliche Restriktionen darstellen.

Ein Beispiel für ein Gerät mit einem zweidimensionalen (ebenen) Betriebsbereich, als Betriebskennfeld bezeichnet, ist ein Kompressor. Als Kenngrößen für den Betriebspunkt eines Kompressors wählt man z. B. den Gasvolumenstrom V und die Enthalpiedifferenz H. Diese Kenngrößen dienen als Koordinatenachsen für die Darstellung des Betriebskennfeldes, welches als die Gesamtheit aller für den Betrieb des Kompressors zulässigen Punkte (Betriebspunkte) in der V'-H-Ebene definiert wird. In der Praxis weist das Betriebskennfeld meist die Form eines gekrümmten Vieleckes auf. Die Seiten des Vielecks sind die sogenannten Grenzlinien, bei deren Überschreitung bestimmte Nebenbedingungen nicht mehr erfüllt sind. Eine der Grenzlinien ist z. B. die sogenannte Pumpgrenzlinie, die einen minimalen Gasvolumenstrom festlegt, bei dem noch ein Schutz gegen Pumpstöße gegeben ist; jenseits der Pumpgrenzlinie wird der Betrieb des Kompressors instabil. Weitere Grenzlinien entsprechen der Maximalleistung des Kompressorantriebs, der maximalen Fördermenge, der minimalen und der maximalen Drehzahl.

Die Kontrolle eines Kompressors hat zwei Aufgaben:

1. Vorsorgende Kontrolle zum Schutz der Gerätschaften gegen gefährliche und instationäre Betriebsbedingungen, z.B. ein Schutz vor Pumpstößen.

2. Funktionale Kontrolle, um z.B. eine bestimmte Drehzahl des Kompressors in Abhängigkeit vom Betriebszustand (z. B. der Verbraucherlast) herzustellen oder einen vorgegebenen Sollwert einzuhalten.

Bekannte Kontrollen für Kompressoren beruhen auf der Messung einiger Kenngrößen der Kompressoren und ihrer Regler. Wenn der Betriebspunkt eine im Betriebskennfeld in einem bestimmten Abstand zu einer Grenzlinie parallel verlaufende sogenannte Regellinie überschreitet, werden geeignete Maßnahmen ergriffen, um den Betriebspunkt wieder in einen Bereich diesseits der Regellinie zurückzuführen.

In der EP-B-0 332 888 wird die Geschwindigkeit der Betriebspunktverschiebung in Richtung zur Pumpgrenze im Betriebskennfeld ermittelt; bei Überschreiten einer geschwindigkeitsabhängig unterschiedlich weit vor der Pumpgrenze verlaufenden Pumpregellinie folgt eine einer normalen Abblasregelung überlagerte Schnellöffnung eines Ab- oder Umblaseventils.

Die Verknüpfung mehrerer ursprünglich unabhängiger Regelkreise ist aus der US 3,994,623 bekannt. Es wird ein Verfahren vorgeschlagen, welches mit Hilfe einer Kaskadenschaltung durchgeführt werden kann. Das Verfahren besteht darin, die Regelkreise für die Drehzahl, den Förderdruck und den Gasvolumenstrom miteinander zu verbinden, wobei das Ausgangssignal jeder äußeren Schleife das Eingangssignal der nächsten inneren Schleife darstellt.

Bei den bekannten Regelverfahren ist für jede der Regellinien ein getrennter Regelkreis vorgesehen. Bei Überschreiten einer Regellinie werden Maßnahmen ergriffen, die von der jeweils überschrittenen Regellinie und ihrer speziellen Form abhängen. Diese Verfahren beruhen somit auf einer unabhängigen Beschreibung jeder einzelnen Regellinie. Falls sich der Betriebspunkt in einem Bereich nahe zweier Grenzlinien (einer "Ecke" des Betriebsbereiches) befindet, wird die Regelung des Betriebspunktes sehr kompliziert. Dabei arbeiten die zu den verschiedenen Grenzlinien gehörenden Regelkreise oftmals unabhängig voneinander und konkurrieren miteinander, oder aber das Zusammenwirken der verschiedenen Regelkreise ist nicht vollständig.

Ähnliche Schwierigkeiten ergeben sich auch bei der Regelung von anderen Geräten oder aus mehreren Geräten bestehenden Anlagen mit einem zwei-, drei- oder höherdimensionalen Betriebsbereich.

Im Fall eines dreidimensionalen Betriebsbereiches lassen sich die Randbedingungen, die nicht über- oder unterschritten werden dürfen, meist als - möglicherweise gekrümmte - Ebenen darstellen. Der Betriebsbereich ist dann ein unregelmäßiger Polyeder mit gekrümmten Seitenflächen. Wenn der Betriebspunkt sich in der Nähe von mehr als einer der Seitenflächen befindet, resultiert daraus ein kompliziertes Regelverhalten. Im allgemeinen Fall eines N-dimensionalen Betriebsbereiches lassen sich die Randbedingungen meist als - möglicherweise gekrümmte - (N-1)-dimensionale Hyperebenen darstellen. Auch hier ergeben sich besondere Schwierigkeiten in der Regelung bei Annäherung des Betriebspunktes an mehr als eine der Hyperebenen.

Eine erste Aufgabe der vorliegenden Erfindung besteht darin, ein einheitliches Verfahren zur Überwachung oder Regelung der Lage des Betriebspunktes in einem zwei- oder mehrdimensionalen Betriebsbereich bereitzustellen, das von der speziellen Form des Betriebsbereiches unabhängig ist und das die genannten Schwierigkeiten bei einer Annäherung des Betriebspunktes an die Grenzen des Betriebsbereiches vermeidet. Das Verfahren soll es ermöglichen, den Benutzer zuverlässig vor unzulässigen oder gefährlichen Betriebsbedingungen zu warnen (Überwachung) bzw. diese zu vermeiden oder einen vorgegebenen Sollwert einzuhalten (Regelung).

Diese Aufgabe wird durch ein Verfahren zur Überwachung oder Regelung eines Gerätes oder einer aus mehreren Geräten bestehenden Anlage mit einem zwei- oder mehrdimensionalen Betriebsbereich gelöst, bei dem erfindungsgemäß eine Abbildung des Betriebsbereiches oder eines Teilbereiches davon auf einen Einheitsbereich oder auf den Betriebsbereich eines anderen Gerätes zur Überwachung bzw. Regelung herangezogen wird.

Gemäß diesem Verfahren wird ein Betriebspunkt oder Sollpunkt des Betriebsbereiches mittels der Abbildung in einen Punkt im Einheitsbereich oder in dem Betriebsbereich des anderen Gerätes transformiert. Die Überwachung bzw. Regelung erfolgt dabei aufgrund der Lage des Bildes des Betriebspunktes, das durch die Abbildung entsteht.

Unter einem Einheitsbereich ist hierbei ein an sich beliebiges, ausgewähltes einfach zusammenhängendes Gebiet zu verstehen. Für zweidimensionale Betriebsbereiche kann z.B. vorteilhaft der Einheitskreis oder eine Halbebene als Einheitsbereich dienen. Für höherdimensionale Betriebsbereiche spielt vorteilhaft die Einheitskugel oder ein Halbraum diese Rolle.

Wenn eine Abbildung des Betriebsbereiches auf einen Einheitsbereich erfolgt, kann mit Hilfe des erfindungsgemäßen Verfahrens die Annäherung des Betriebspunktes an eine Grenze des Betriebsbereiches dadurch erkannt werden, daß sich das Bild des Betriebspunktes an eine Grenze des Einheitsbereiches annähert. Ein Vorteil des erfindungsgemäßen Verfahrens ist dabei, daß die Annäherung des Bildes des Betriebspunktes an eine Grenze des Einheitsbereiches bei geeigneter Wahl des Einheitsbereiches, der Abbildungsvorschrift und der Koordinatendarstellung des Bildes anhand der Kontrolle einer einzigen Grenze festgestellt und geregelt werden kann.

Ein weiterer Vorteil des erfindungsgemäßen Verfahrens ist, daß die Kontrolle des Betriebspunktes verschiedener Geräte mit unterschiedlich geformten Betriebsbereichen auf eine einheitliche Art erfolgen kann.

Wenn eine Abbildung des Betriebsbereiches des zu kontrollierenden Gerätes auf den Betriebsbereich eines anderen Gerätes durchgeführt wird, kann die Überwachung bzw. Regelung des Betriebspunktes des zu kontrollierenden Gerätes auf dieselbe Weise erfolgen wie bei dem anderen Gerät. Insbesondere können auf diese Weise Methoden, die sich zur Überwachung des Betriebspunktes eines bestimmten Gerätes bewährt haben, auf die Überwachung des Betriebspunktes beliebiger anderer Geräte mit beliebig geformten Betriebsbereichen derselben Dimension übertragen werden.

Das erfindungsgemäße Verfahren eignet sich für eine Vielzahl von Anwendungsgebieten, insbesondere zur Überwachung eines Kompressors.

Vorteilhafterweise werden in dem erfindungsgemäßen Verfahren ein oder mehrere Prozeßparameter mittels der Abbildung oder der dazu inversen Transformation ermittelt.

In einer vorteilhaften Ausgestaltung enthält das erfindungsgemäße Verfahren zur Überwachung folgende Schritte:

a) Bestimmung des Betriebspunktes im Betriebsbereich;
b) Transformation des Betriebspunktes mittels einer gespeicherten Abbildungsvorschrift für die Abbildung;
c) Ausgabe der Koordinaten des Bildes des Betriebspunktes.

Ein erfindungsgemäßes Verfahren zur Regelung enthält in einer vorteilhaften Ausgestaltung folgende Schritte:

a) Bestimmung des Betriebspunktes im Betriebsbereich;
b) Transformation des Betriebspunktes mittels einer gespeicherten Abbildungsvorschrift fiir die Abbildung;
c) Vergleich der Lage des Bildes des Betriebspunktes mit Grenzlinien, Regellinien oder mit dem Bild eines Sollpunktes im Bildbereich;
d) Bestimmung von Steuerparametern, die einen Regelungseingriff festlegen;
e) Ausführung des Regelungseingriffs.

Für einen zweidimensionalen Betriebsbereich kann das erfindungsgemäße Verfahren vorteilhaft so ausgeführt, werden, daß die Abbildung ein Polygon, das den Betriebsbereich annähert, auf einen Einheitsbereich oder einen Betriebsbereich eines anderen Gerätes transformiert. Vorteilhaft kann dann die Abbildung mittels einer durch das Christoffel- Schwarz-Integral definierten Funktion erfolgen. Dabei ist es vorteilhaft, den Betriebsbereich von innen anzunähern. Das bedeutet, daß das Polygon, das den Betriebsbereich annähert, ganz im Inneren des Betriebsbereiches liegt.

Eine weitere Aufgabe der Erfindung ist es, eine Vorrichtung zur Durchführung der Verfahren zur Überwachung bzw. zur Regelung bereitzustellen.

Diese Aufgabe wird durch eine Vorrichtung zur Überwachung oder Regelung eines Gerätes oder aus mehreren Geräten bestehenden Anlage mit einem zwei- oder mehrdimensionalen Betriebsbereich gelöst, bei der erfindungsgemäß Mittel zur Bestimmung und Speicherung von Parametern vorhanden sind, die fiir die Durchführung einer Abbildung erforderlich sind, die den Betriebsbereich oder einen Teil davon in einen Einheitsbereich oder den Betriebsbereich eines anderen Gerätes abbildet.

Die Vorrichtung enthält ferner Mittel zur Durchführung der Abbildung eines beliebigen Punktes des Betriebsbereiches.

Weiterhin ist es vorteilhaft, wenn die Vorrichtung Mittel zum Vergleich von Bildern von zwei im Betriebsbereich liegenden Punkten enthält, wobei der Vergleich in dem Einheitsbereich oder in dem Betriebsbereich des anderen Gerätes durchgeführt wird.

In einer weiteren vorteilhaften Ausgestaltung enthält die Vorrichtung Mittel zum Vergleich eines Bildes eines Punktes, der im Betriebsbereich liegt, mit wenigstens einer Linie (insbesondere einer Regel- oder Grenzlinie) in dem Einheitsbereich oder dem Betriebsbereich des anderen Gerätes.

Weiterhin kann die Vorrichtung Mittel zur Ermittlung eines oder mehrerer Prozeßparameter mittels der Abbildung des Betriebsbereiches auf den Einheitsbereich oder den Betriebsbereich des anderen Gerätes enthalten.

Eine Vorrichtung zur bloßen Überwachung des Betriebspunktes eines Gerätes oder einer aus mehreren Geräten bestehenden Anlage enthält dabei vorteilhafterweise die folgenden Teile:

a) Mittel zur Bestimmung des Betriebspunktes des Gerätes oder der aus mehreren Geräten bestehenden Anlage;
b) Mittel zur Durchführung einer Abbildung des Betriebspunktes, die den Betriebsbereich oder einen Teil des Betriebsbereiches auf einen Einheitsbereich oder den Betriebsbereich eines anderen Gerätes abbildet;
c) Mittel zur Ausgabe der Koordinaten des Bildes des Betriebspunktes.

Eine Vorrichtung zur Regelung eines Gerätes oder einer aus mehreren Geräten bestehenden Anlage kann vorteilhafterweise die folgende Teile enthalten:

a) Mittel zur Bestimmung des Betriebspunktes des Gerätes oder der aus mehreren Geräten bestehenden Anlage;
b) Mittel zur Durchführung einer Abbildung des Betriebspunktes, die den Betriebsbereich oder einen Teil des Betriebsbereiches auf einen Einheitsbereich oder den Betriebsbereich eines anderen Gerätes abbildet;
c) Mittel zur Bestimmung von Parametern, die einen Regelungseingriff festlegen;
d) Mittel zur Ausführung des Regelungseingriffes.

Schließlich kann eine vorteilhafte Ausgestaltung einer Vorrichtung zur Regelung die folgenden Teile enthalten:

a) ein erstes Rechenmodul zur Transformation eines Sollpunktes in einen Punkt des Einheitsbereiches oder des Betriebsbereiches des anderen Gerätes;
b) eine Meßeinheit zur Bestimmung der Lage des Betriebspunktes;
c) ein zweites Rechenmodul zur Transformation des Betriebspunktes in einen Punkt des Einheitsbereiches oder des Betriebsbereiches des anderen Gerätes;
d) eine Vergleichseinheit, die den transformierten Betriebspunkt mit dem transformierten Sollpunkt oder mit mindestens einer Grenz- oder Regellinie des transformierten Betriebsbereiches vergleicht;
e) eine Kontrolleinheit zur Bestimmung der für die Regelung erforderlichen Parameter; sowie
f) eine Ausführungseinheit zur Umsetzung der zur Regelung erforderlichen Handlungen.

Hierbei können das erste und zweite Rechenmodul auch identisch sein; in diesem Falle transformiert das (einzige) Rechenmodul sowohl den Sollpunkt als auch den Betriebspunkt.

Im folgenden sollen ein erfindungsgemäßes Verfahren zur Überwachung bzw. zur Regelung der Lage des Betriebspunktes und die zum Verständnis dieses Verfahrens erforderlichen Grundlagen näher erläutert werden.

Aus mathematischer Sicht stellt ein Betriebsbereich in aller Regel ein einfach zusammenhängendes Gebiet dar. Dann ist eine stetige, differenzierbare und umkehrbare Abbildung des Betriebsbereiches auf das Innere eines Einheitsbereiches (also eines anderen einfach zusammenhängenden Gebietes) immer möglich.

Weiterhin kann durch eine Abbildung des Betriebsbereiches auf einen Einheitsbereich und eine nachfolgende Abbildung des Einheitsbereiches auf den Betriebsbereich eines anderen Gerätes grundsätzlich ein beliebiger N-dimensionaler Betriebsbereich auf einen N-dimensionalen Betriebsbereich eines anderen Gerätes abgebildet werden.

Insbesondere bei einem zweidimensionalen Betriebsbereich können die Koordinatenachsen als die reelle und die imaginäre Achse der komplexen Zahlenebene aufgefaßt werden. Der Riemann sche Abbildungssatz der komplexen Analysis sichert dann, daß für jedes einfach zusammenhängende Gebiet eine eineindeutige (umkehrbare) und konforme Abbildung auf das Innere des Einheitskreises existiert.

Zur Durchführung des Überwachungs- bzw. Regelungsverfahrens wird zunächst eine Abbildungsvorschrift für die Abbildung des Betriebsbereiches oder eines Teiles davon auf einen Einheitsbereich oder den Betriebsbereich eines anderen Gerätes in geeigneter Form gespeichert.

Die gespeicherte Abbildungsvorschrift kann z. B. eine Rechenvorschrift zur Berechnung des Bildes jedes Punktes innerhalb des Betriebsbereiches oder eines Teiles davon sein. Im einfachsten Fall ist diese Rechenvorschrift eine analytische Formel oder eine Näherungsformel für die Abbildung. Alternativ kann die Abbildungsvorschrift z. B. aus einer Tabelle bestehen, die zu ausgewählten Punkten des Betriebsbereiches (Urbildpunkten) die dazugehörigen Bildpunkte enthält, evtl. zusammen mit einer Interpolationsvorschrift, wie mit dazwischenliegenden Punktes des Betriebsbereiches zu verfahren ist.

Die gespeicherte Abbildungsvorschrift hängt von der speziellen Form des Betriebsbereiches ab und ist charakteristisch für das zu regelnde Gerät. Die Speicherung erfolgt in der Regel für ein bestimmtes Gerät nur ein einziges Mal, solange sich die Geräteeigenschaften (z.B. durch Alterung) nicht verändern.

Für das eigentliche Überwachungsverfahren wird zunächst der Betriebspunkt im Betriebsbereich bestimmt. Dieser Schritt erfolgt zweckmäßig mittels Meßgeräten, die zur Erfassung der Kenngrößen des zu regelnden Gerätes geeignet sind. Die Meßwerte werden in Koordinatenwerte des Betriebsbereiches umgewandelt. Der Betriebspunkt liegt danach als ein Satz N Koordinatenwerten vor, entsprechend den N Dimensionen des Betriebsbereiches. Im folgenden Schritt wird der Betriebspunkt mittels der gespeicherten Abbildungsvorschrift abgebildet. Das Bild des Betriebspunktes liegt nun als ein Satz von N Werten von transformierten Koordinaten vor, die nicht mehr unmittelbar den Kenngrößen des zu kontrollierenden Gerätes entsprechen müssen.

Anhand der Lage des Bildes des Betriebspunktes werden im folgenden Schritt Vergleiche angestellt. Dazu wird z. B. die Lage des Bildes des Betriebspunktes bezüglich der Grenze des Bildbereiches ermittelt. Alternativ oder zusätzlich kann die Lage des Bildes des Betriebspunktes mit der Lage des Bildes eines Sollbetriebspunktes verglichen werden, wobei der Sollbetriebspunkt einmalig festgelegt oder laufend den Betriebserfordernissen angepaßt sein kann. Ebenfalls ist es möglich, daß zusätzlich die Geschwindigkeit der Annäherung des Bildes des Betriebspunktes an die Grenze des Bildbereiches bzw. an das Bild des Sollbetriebspunktes bestimmt wird.

Aufgrund solcher Informationen werden geeignete Steuerparameter festgelegt. Dies kann z. B. dadurch geschehen, daß zunächst in den transformierten Koordinaten die Richtung bestimmt wird, in die das Bild des Betriebspunktes innerhalb des Bildbereiches aufgrund des Regelungseingriffes verschoben werden soll. Diese Richtung kann z. B. der Richtungsvektor vom Bild des Betriebspunktes zum Bild des Sollbetriebspunktes oder ein ins Innere des Bildbereiches weisender Normalenvektor auf der Grenze des Bildbereiches sein.

Nun kann einerseits der soeben ermittelte Richtungsvektor mittels der zur gespeicherten Abbildungsvorschrift inversen Abbildung in die Koordinaten des ursprünglichen Betriebsbereiches transformiert werden und anhand des entstandenen Urbildes des Richtungsvektors ein konkreter Regelungseingriff festgelegt werden. Hierbei kann die inverse Abbildung, ähnlich wie die ursprüngliche Abbildung mittels einer Rechenvorschrift oder einer Tabelle von Urbild- und Bildpunkten oder von Urbild- und Bildvektoren erfolgen. Erfolgt die inverse Abbildung mittels einer Tabelle, so kann diese Tabelle dieselbe sein, die zur ursprünglichen Abbildung des Betriebspunktes verwendet wurde.

Andererseits kann der ermittelte Richtungsvektor in transformierten Koordinaten stattdessen direkt zur Festlegung der Parameter für den konkreten Regelungseingriff herangezogen werden. Hierzu ist es vorteilhaft, wenn zuvor eine Tabelle angelegt wurde, in der für bestimmte, einfach auszuführende Regelungseingriffe die zu erwartete Verschiebungsrichtung des Bildes des Betriebspunktes in den transformierten Koordinaten eingetragen wurde. Geeignete Regelungseingriffe für die Aufname in eine solche Tabelle sind insbesondere solche Eingriffe, bei denen nur ein einziger Betriebsparameter verändert wird. Mittels dieser Tabelle kann dann ein konkreter Regelungseingriff, der die Veränderung mehrerer Betriebsparameter umfassen kann, festgelegt werden.

Im letzten Schritt des vorgeschlagenen Verfahrens wird schließlich der so festgelegte Regelungseingriff gemäß den ermittelten Steuerparametern ausgeführt.

Des weiteren soll nun eine erfindungsgemäße Vorrichtung zur Überwachung des Betriebspunktes näher erläutert werden.

Zunächst enthält diese Vorrichtung Mittel zur Bestimmung des Betriebspunktes. Diese Mittel können z. B. Meßgeräte sein, die an ihrem Ausgang ein Signal erzeugen, das ein eindeutiges Maß für den Wert einer Kenngröße darstellt. Die von den Meßgeräten erzeugten Signale repräsentieren damit den Betriebspunkt.

Weiterhin enthält die Vorrichtung Mittel zur Durchführung der Abbildung des Betriebspunktes. Diese können z. B. aus einem Analog-Digital-Wandler, einer Recheneinheit und einer Speichereinheit bestehen. Die Analog-Digital-Wandler wandeln die den Betriebspunkt repräsentierenden Signale in einen entsprechenden digitalen Wert um. Der Betriebspunkt ist nun durch N digitale Werte repräsentiert.

Eine Recheneinheit erzeugt aus diesen Werten mit Hilfe einer in einer Speichereinheit gespeicherten Abbildungsvorschrift neue digitale Werte, die die Koordinaten des Bildes des Betriebspunktes im Einheitsbereich repräsentieren. Die Abbildungsvorschrift kann dabei in der Speichereinheit z. B. als eine Rechenvorschrift oder als eine Tabelle mit Interpolationsvorschrift vorliegen. Statt auf digitale Weise kann die Berechnung auch auf analoge Weise ohne die Verwendung von Analog-Digital-Wandlern erfolgen. Die Mittel zur Durchführung der Abbildung des Betriebspunktes enthalten dann eine analoge Recheneinrichtung.

Schließlich sind Mittel zur Ausgabe der Koordinaten des Betriebspunktes vorhanden. Diese können z. B. ein Bildschirm zur graphischen Darstellung von einer oder mehreren Koordinaten des Bildes des Betriebspunktes oder Digital-Analog-Wandler mit nachgeschalteten Anzeigeinstrumenten sein.

Eine Vorrichtung, die über die bloße Überwachung und Anzeige des Betriebspunktes hinaus auch zur Regelung des Betriebspunktes dienen soll, enthält weitere Komponenten.

So sind in einer solchen Vorrichtung ferner Mittel zur Bestimmung der Parameter, die einen Regelungseingriff festlegen, vorhanden. Diese können z.B. eine Recheneinheit, eine Speichereinheit und einen Digital-Analog-Wandler umfassen. Die Recheneinheit errechnet anhand der Lage des Bildes des Betriebspunktes in transformierten Koordinaten die Parameter, die einen Regelungseingriff festlegen; dabei greift sie auf in der Speichereinheit gespeicherte Rechenvorschriften oder auf Tabellen zur Berechnung dieser Parameter zurück. Diese Parameter werden vom Digital-Analog-Wandler in Signalwerte umgewandelt. Die Mittel zur Ausführung des Regelungseingriffes beeinflussen dann aufgrund dieser Signalwerte, unmittelbar das Verhalten des zu regelnden Gerätes oder der zu regelnden Anlage.

Ausführungsbeispiele der Erfindung werden anhand der beigefügten Zeichnungen erläutert. Es zeigt:

Fig. 1 eine Prinzipskizze einer Vorrichtung zur Überwachung, zur Verhütung der Überschreitung der Grenze des Kennfeldes sowie zur Sollwertregelung eines Gerätes oder einer Anlage nach der vorliegenden Erfindung.

Fig. 2 das Betriebskennfeld eines Kompressors,

Fig. 3 den Einheitskreis als Einheitsbereich,

Fig. 4 eine Prinzipskizze zur Kontrolle eines Kompressors,

Fig. 5 die obere Halbebene als Einheitsbereich,

Fig. 6 ein rechteckiges Betriebskennfeld, sowie

Fig. 7 ein polygonales Betriebskennfeld.

Beispiel 1

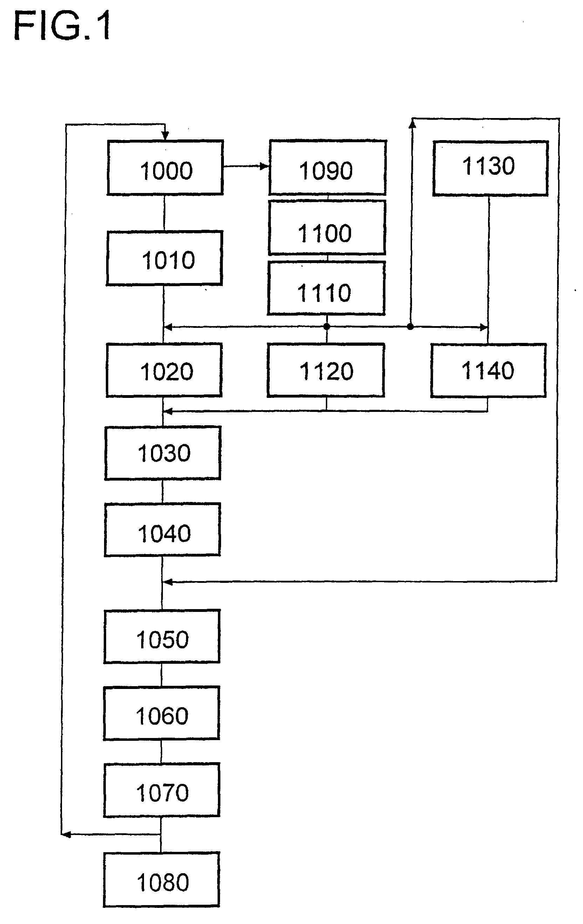

In diesem Beispiel wird anhand der Fig. 1 eine erfindungsgemäße Vorrichtung zur Überwachung sowie zur Verhütung der Überschreitung der Grenze des Kennfeldes eines Gerätes oder einer Anlage erläutert.

Das geregelte Gerät 1000 in Fig. 1 ist mit einer Einheit 1090 zur Vorgabe des Betriebsbereiches, mit einer Einheit 1100 zur Festlegung der Hin- und Rücktransformationen des Betriebsbereiches sowie zur Ermittlung der Hin- und Rücktransformationsparameter sowie mit einer Einheit 1110 zur Speicherung der Transformationsvorschriften ausgerüstet, die in einer Einheit 1120 zur Transformation des Betriebsbereiches mit allen seinen Grenzlinien zu einem Einheitsbereich erforderlich sind.

Eine Meßeinheit 1010 bestimmt die Lage des Betriebspunktes (Istpunktes). Eine Funktionseinheit 1020 transformiert den Betriebspunkt in einen Punkt im Einheitsbereich. Diese Einheit 1020 ermittelt auch, falls erforderlich, solche Parameter wie die Bewegungsgeschwindigkeit und Bewegungsrichtung des Betriebspunktes.

Eine Vergleichseinheit 1030 vergleicht den transformierten Betriebspunkt mit der Grenz- oder Regellinie des transformierten Betriebsbereiches.

Eine weitere Einheit 1040 ermittelt die Steuergrößen und die neue Lage der Regellinien im transformierten Bereich. Diese Einheit bestimmt die zur Durchführung der Regelung erforderlichen Parameter und die neue Lage der Regellinie bei dynamischen Regelungen in Abhängigkeit der Bewegungsgeschwindigkeit und Bewegungsrichtung des Betriebspunktes.

Die Rücktransformation der Parameter der vorzunehmenden Regelungen erfolgt in einer Einheit 1050. Eine Ausführungseinheit 1060 des Regelungssystems führt die Regelungen an den Steuerorganen 1070 aus.

Über eine Ausgabe- und Visualisierungseinheit 1080 kann der gesamte Regelvorgang verfolgt werden.

Beispiel 2

In diesem Beispiel wird anhand der Fig. 1 eine allgemeine Beschreibung einer Vorrichtung zur Sollwertregelung und Kontrolle eines Gerätes oder einer Anlage mit dem erfindungsgemäßen Verfahren erläutert.

Die Einheiten 1000 bis 1120 der Fig. 1 sind im Beispiel 1 beschrieben. Der Sollwert S wird in einer Eingabeeinheit 1130 vorgegeben und in einer Recheneinheit 1140 zu einem Punkt im Einheitsbereich transformiert.

Der transformierte Sollwert wird in der Vergleichseinheit 1030 mit dem transformierten Istwert und mit den Regellinien im Einheitsbereich verglichen.

Vor diesem Vergleich können die Abstände Istwert - Sollwert, Istwert - Regellinien und Sollwert - Regellinien mit entsprechenden Straffunktionen addiert oder multipliziert werden (D. Himmelblau, Applied Nonlinear Programming, McGraw-Hill Book Co., 1972, Part III, Chapter 7; N. Staroselsky and L. Ladin, More effective control for centrifugal gas compressors operating in parallel, Paper 86-GT-204, Am. Soc. Mec. Eng. 1986, S. 7 und Fig. 8). Die Aufgabe dieser Funktionen ist es, eine Gewichtung der Abstände vorzunehmen, je nachdem, ob sich der Istwert näher oder weiter von den Regellinien befindet.

Damit wird ein Zusammenspiel zwischen der Sollwertregelung und der Verhütung der Überschreitung der Grenze des Kennfeldes gemäß Beispiel 1 geschaffen.

Beispiel 3

In diesem Beispiel wird eine erfindungsgemäße Vorrichtung und ein erfindungsgemäßes Verfahren zur Kontrolle, Überwachung und Regelung eines Kompressors mit zweidimensionalem Betriebsbereich beschrieben.

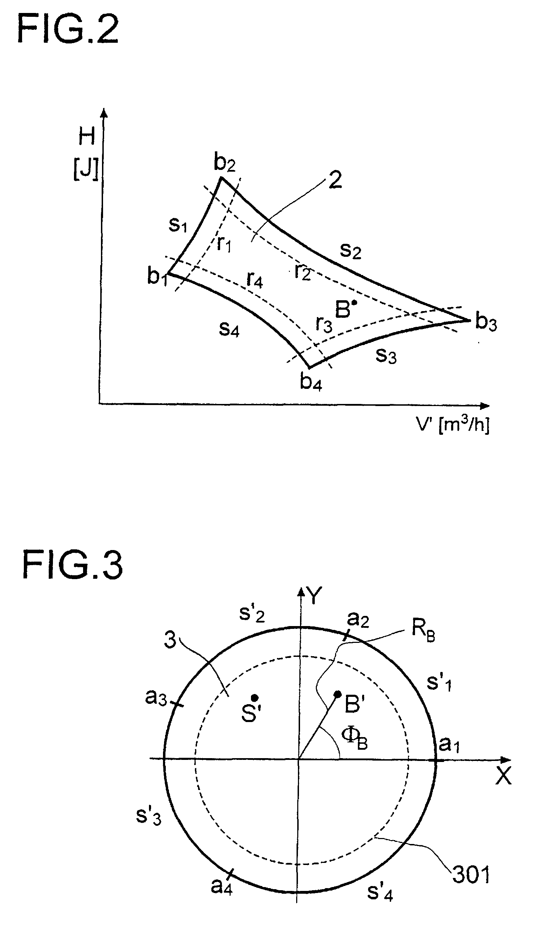

Fig. 2 zeigt schematisch einen typischen zweidimensionalen Betriebsbereich eines Kompressors. Dieser Betriebsbereich wird auch als Betriebskennfeld 2 bezeichnet Die Koordinaten in dieser Darstellung sind der Gasvolumenstrom V' in $m^3/h$ und die Enthalpiedifferenz H in J. Statt der Enthalpiedifferenz wird oft das Druckverhältnis $r = P_d / P_i$ benutzt, wobei $P_i$ Saugdruck und $P_d$ Förderdruck sind.

Das Betriebskennfeld 1 ist durch die Seiten $s_1$ bis $s_4$, die sogenannten Grenzlinien, begrenzt. Die Seite $s_1$ ist die Pumpgrenze, bei deren Überschreiten der Betrieb des Kompressors instabil wird. Die Seite $s_2$ besteht aus den niedrigsten Werten aus zwei Betriebslinien - der maximalen Antriebsleistungslinie und der maximalen Drehzahllinie des Kompressors. Die Seite $s_3$ entspricht der maximal möglichen Fördermenge und die Seite $s_4$ ist die Betriebslinie bei minimaler Drehzahl des Kompressors. Die Ecken des Kennfeldes, d. h. die Schnittpunkte der Seiten, sind mit $b_1$ bis $b_4$ gekennzeichnet. Weiterhin sind in Fig. 2 die sogenannten Regellinien $r_1$ bis $r_4$, der Betriebspunkt B und der Sollbetriebspunkt S eingezeichnet.

Bei herkömmlichen Verfahren zur Kompressorüberwachung und -regelung wird die Lage des Betriebspunktes B bezüglich einer oder mehrerer der Regellinien für jede Regellinie getrennt überwacht.

In Fig. 3 ist als Einheitsbereich der Einheitskreis 3 mit dem Radius $R_E = 1$ gezeigt. Eine Abbildung, die das Kennfeld 1 aus Fig. 2 auf den Einheitskreis 3 aus Fig. 3 abbildet, sei mit $\psi_1$ bezeichnet; sie sei als bekannt vorausgesetzt. Die Bilder der Ecken $b_1$ bis $b_4$ sind mit $a_1$ bis $a_4$ bezeichnet ($a_i = \psi_1(b_i)$, i = 1,...,4). Die Bilder der Grenzlinien $s_1$ bis $s_4$ sind entsprechend mit $s_1'$ bis $s_4'$ bezeichnet; sie weisen die Form von Kreisbogenstücken auf. Das Bild des Betriebspunktes unter der Abbildung $\psi_1$ ist als $B' = \psi_1(B)$ bezeichnet, das Bild des Sollbetriebspunktes entsprechend als S'.

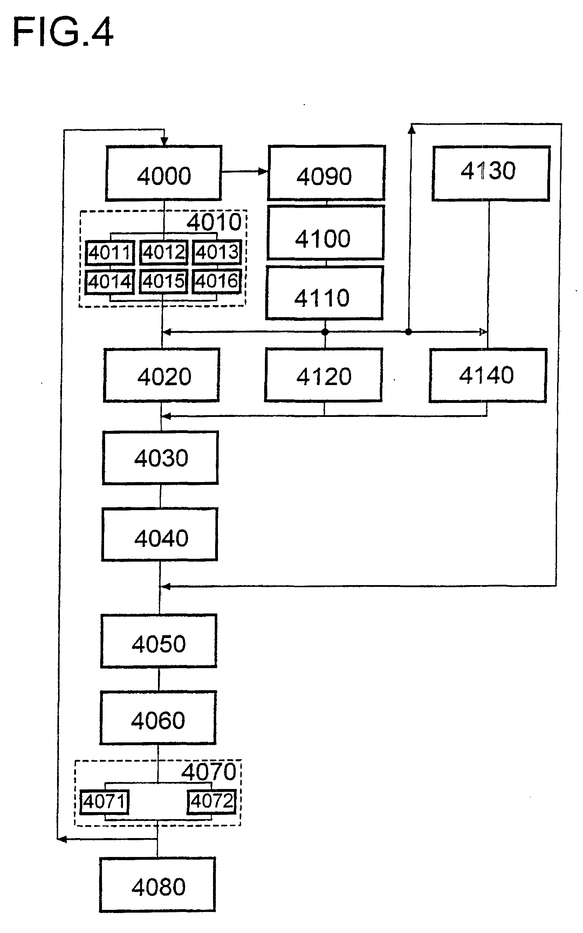

Der Ablauf der Kontrolle und Regelung des Kompressors mit dem erfindungsgemäßen Verfahren wird anhand der Fig. 4 erläutert. Fig. 4 zeigt schematisch eine Vorrichtung zur Regelung eines Kompressors 4000. Die Einheiten 4000 bis 4140 entsprechen in ihrer Funktion den Einheiten 1000 bis 1140 aus Fig. 1.

Die Meßeinheit 4010 besteht aus mehreren Meßinstrumenten für den Ansaugdruck, den Betriebsdruck, den Gasvolumenstrom etc., z.B. 4011, 4012 und 4013, und Analog-Digital- bzw. Digital-Digital-Wandlern, z.B. 4014, 4015 und 4016.

In die Speichereinheit 4110 werden die Transformationsvorschriften wie Koeffizienten, Rechenprozeduren usw. sowie eine Tabelle gespeichert, die die ausgewählten Punkte des in Fig. 2 gezeigten Betriebsbereiches 2 auf ihre Bildpunkte in dem Einheitskreis 3 aus Fig. 3 zuordnet. Die Kontrolle und Regelung des Betriebspunktes B erfolgt nun auf folgende Weise:

Mit den oben erwähnten Meßinstrumenten werden die momentanen Werte des Gasvolumenstroms V' und des Druckverhältnisses r bestimmt. Die Werte von V' und r legen den Betriebspunkt B fest. Sie werden der Recheneinheit 4020 zugeführt. Mittels der in der Speichereinheit 4110 gespeicherten Transformationsvorschriften und einer Tabelle von Urbild- und Bildpunkten berechnet die Recheneinheit 4020 die Lage des Bildes B' des Betriebspunktes im Einheitskreis 4. Am Ausgang der Recheneinheit 4020 liegen die Koordinaten von B' z. B. als Polarkoordinaten $R_B$, $\varphi_B$ vor.

Die Einheit 4140 berechnet in ähnlicher Weise die Lage des Bildes S' des Sollpunktes S, der in 4130 vorgegeben ist. Die Koordinaten von S' sind z. B. Polarkoordinaten $R_S$, $\varphi_S$.

Des weiteren werden die Koordinaten des Betriebspunktes B' und des Sollpunktes S' im Bildbereich der Regeleinheit 4030 zugeführt. Die Regeleinheit vergleicht die Koordinaten des Bildes des Betriebspunktes B' ($R_B$, $\varphi_B$) mit den Koordinaten des Bildes des zuvor festgelegten Sollbetriebspunktes S' ($R_S$, $\varphi_S$) und mit der in Fig. 3 gezeigten Regellinie 301, d. h. mit ihrem Radius $R_R$.

Aufgrund dieses Vergleichs berechnet die Einheit 4040 einen Richtungsvektor, entlang dem der Betriebspunkt verschoben werden soll.

Dabei gibt der Wert $R_R - R_B$ unmittelbar den Abstand des Bildes des Betriebspunktes von der Regellinie im Einheitskreis an, entsprechend gibt $1 - R_B$ den Abstand von der Einheitskreisgrenze an. Wird $R_B$ größer als ein zuvor festgelegter Wert $R_W$, so kann ein akustisches Warnsignal ausgegeben werden, das den Betreiber des Kompressors 4000 warnt, daß sich der Betriebspunkt auf gefährliche Weise an eine Grenze des Betriebsbereiches annähert.

In der Einheit 4040 werden auch Steuergrößen zur Verhütung der Kennfeldgrenzüberschreitung des Kompressors und zur Sollwertannäherung ermittelt analog zu Beispiel 1, 2.

Befindet sich der Istpunkt in der Nähe der Regellinie oder nähert sich zu schnell an die Regellinie, so kann die Umblaseventilöffnungsstellung z.B. proportional zu $|R_R - R_B|$ angesetzt werden.

Befindet sich der Istpunkt in der Nähe des Sollpunktes, so kann die Kompressordrehzahländerung zur Erreichung des Sollwertes z.B. proportional zu $|B' - S'|$ angesetzt werden.

Für den Fall, daß eine schnelle Istwertänderung erreicht werden soll und der Abstand zwischen Betriebs- und Sollwert groß und die Kompressorantriebssteuerung träge ist, kann das Umblaseventil zusätzlich kurzzeitig angesteuert werden.

Der in 4040 ermittelte Richtungsvektor wird nun von der inversen Tranformationseinheit 4050 in einem Richtungsvektor im ursprünglichen Kennfeld 2 abgebildet. Dazu greift die inverse Transformationseinheit 4050 auf die in der Speichereinheit 4110 vorliegende Tabelle von Urbild- und Bildpunkten zu. Aufgrund des so erhaltenden Richtungsvektors in den Bild- und Urbild-Koordinaten berechnet die Regeleinheit 4040 schließlich die gewünschte Stellung des Umblaseventils 4071 und der Kompressordrehzahl 4072. Mittels der Ausführungseinrichtung 4060 werden das Umblaseventil 4071 und die Kompressorantriebssteuerung 4072 mit den berechneten Werten angesteuert. Diese Ansteuerung stellt den eigentlichen Regelungseingriff dar.

Das beschriebene Verfahren der Kompressorsteuerung enthält mindestens zwei Vorteile gegenüber herkömmlichen Verfahren. Der erste Vorteil ist, daß die Kontrolle der zulässigen Betriebsbedingungen anhand einer einzigen Grenzlinie, nämlich der Einheitskreislinie, erfolgt und in der Kontrolle eines einzigen Parameters, nämlich $R_B$, besteht. Entsprechend erfolgt die Regelung zum Schutz vor unzulässigen Betriebsbedingungen anhand einer einzigen Regellinie, nämlich der Regellinie 301. Das Bild des Kennfeldes, nämlich die des Einheitskreises, weist dabei keine Ecken auf. Die bekannten Probleme der Regelung des Betriebspunktes in der Nähe von Ecken des Kennfeldes treten daher beim beschriebenen Verfahren nicht auf.

Der zweite Vorteil ist, daß die Berechnungsschritte, die in den Regeleinheiten 4030, 4040, 4050 aufgeführt werden, unabhängig von der Form des ursprünglichen Betriebskennfeldes sind. Diese Berechnungsschritte können daher auf eine Vielzahl von Geräten mit unterschiedlichen Kennfeldern in gleicher Weise angewendet werden. Dabei sind selbstverständlich auch andere Schritte als die hier beschrieben denkbar. So kann z. B. zusätzlich die Geschwindigkeit des Bildes des Betriebspunktes in transformierten Koordinaten zur Regelung herangezogen werden.

Beispiel 4

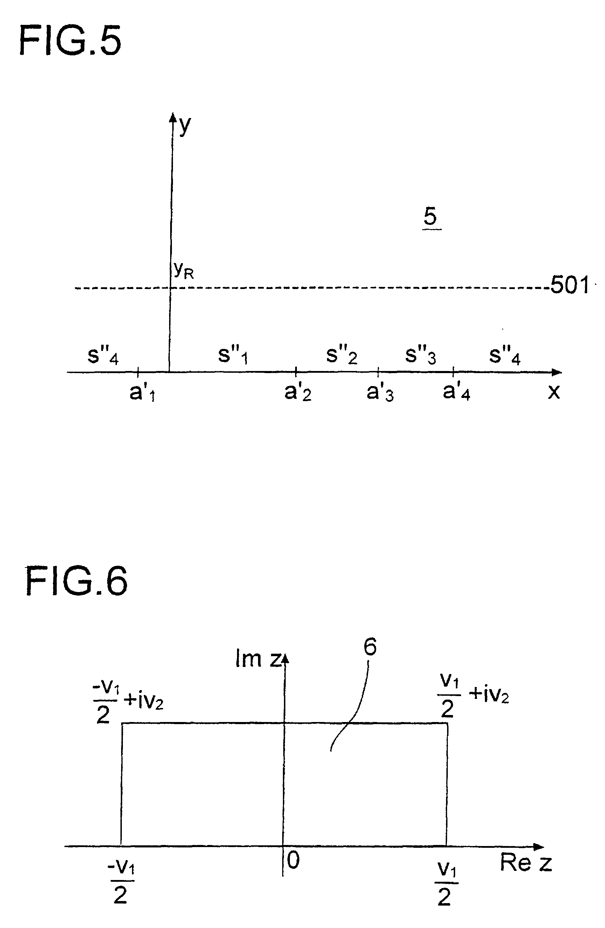

In diesem Beispiel wird das Verfahren aus Beispiel 3 dahingehend verändert, daß anstelle des Einheitskreises die obere Halbebene als Einheitsbereich dient. In Fig. 5 ist die obere Halbebene 5 dargestellt. Sie ist nach unten durch die mit *x* bezeichnete Koordinatenachse begrenzt. Wiederum sei vorausgesetzt, daß eine Abbildung $\psi_2$ bekannt ist, die das Kennfeld 1 aus Fig. 1 in die obere Halbebene 5 abbildet. Die Bilder der Ecken $b_1$ bis $b_4$ sind mit $a_1'$ bis $a_4'$ bezeichnet ($a_1' = \psi_2(b_i)$, i=1,...,4), die Bilder der Grenzlinien $s_1$ bis $s_4$ als $s_1''$ bis $s_4''$. Des weiteren ist in Fig. 5 eine horizontal verlaufende Regellinie 501 eingezeichnet, die die mit *y* bezeichnete Koordinatenachse im Punkt $y_R$ schneidet. Die Kontrolle und Regelung des Kompressors erfolgt wiederum mit einer Vorrichtung gemäß Fig. 4. Die Speichereinheit 4110 enthält nun eine Tabelle, die den Punkten des in Fig. 2 gezeigten Betriebskennfeldes 2 Bildpunkte in der oberen Halbebene 5 zuordnet und evtl. eine umgekehrte Tabelle.

Die Kontrolle und Regelung erfolgt in der gleichen Weise wie in Beispiel 1 mit folgenden Unterschieden: Die Recheneinheit 4020 berechnet die Lage des Bildes B" des Betriebspunktes in der oberen Halbebene. Am Ausgang der Recheneinheit liegen die Koordinaten des Bildes des Betriebspunktes z. B. als rechtwinklige Koordinaten $x_B$, $y_B$ vor. Die Ausgabeeinheit zeigt die Werte $x_B$ und $y_B$ an; dabei gibt $y_B$ unmittelbar den Abstand des Bildes des Betriebspunktes von der Grenze der oberen Halbebene an. Wird $y_B$ kleiner als ein vorher festgelegter Wert $y_W$, so wird ein akustisches Warnsignal ausgegeben. Der Vergleicheinheit 4030 werden die Koordinaten $x_B$ und $y_B$ zugeführt. Die Regelung erfolgt nun aufgrund dieser Koordinaten, der Koordinaten $x_S$ und $y_S$ des Bildes eines Sollbetriebspunktes und der Regellinie 501 in ähnlicher Weise wie in Beispiel 3.

Beispiel 5

In diesem Beispiel wird für ein Gerät mit einem rechteckigen Kennfeld eine explizite Vorschrift für die Abbildung des Kennfeldes auf die obere Halbebene angegeben (I. N. Bronstein und K. A. Semendjajew, Taschenbuch der Mathematik, 25. Auflage, Teubner, Stuttgart 1991). In Fig. 6 ist ein rechtekkiges Kennfeld 6 gezeigt. Die eingezeichneten Koordinatenachsen sind mit Re z und Im z bezeichnet und werden als reelle bzw. imaginäre Achsen der komplexen Zahlenebene aufgefaßt. In dieser Zahlenebene weist das Kennfeld 6 die Ecken

$$\frac{v_1}{2}, -\frac{v_1}{2}, \frac{v_1}{2}+iv_2, -\frac{v_1}{2}+iv_2$$

auf. Ein solches Rechteck 6 läßt sich aus jedem beliebigen rechteckigen Kennfeld durch Drehung und Verschiebung, d. h. durch Multiplikation mit einer komplexen Zahl des Betrages 1 und Addition einer komplexen Zahl, erhalten.

Eine Funktion, die die komplexe obere $\zeta$-Halbebene auf das in Fig. 6 gezeigte Rechteck 6 in der z-Ebene abbildet, ist die Funktion

$$z = c \int_0^\zeta \frac{dt}{\sqrt{(1-t^2)(1-\kappa^2 t^2)}},$$

wobei c eine reelle positive Konstante ist, die von der Größe des Rechtecks abhängt, und $\kappa$ eine reelle Zahl zwischen 0 und 1 ist, die vom Seitenverhältnis $v_2/v_1$ des Rechtecks abhängt (A. Hurwitz und R. Courant, Funktionentheorie, 4. Auflage, Springer-Verlag, Berlin, Seite 436 ff.). Für ein gegebenes Rechteck kann man die Größen c und $\kappa$ numerisch berechnen.

Die angegebene Funktion ist die Umkehrfunktion der verfahrensgemäßen Abbildung des Betriebsbereiches auf den Einheitsbereich. Die im vorstehenden Beispiel 3 genannte Tabelle von Urbild- und Bildpunkten läßt sich hiermit leicht erstellen. Zu einer Auswahl von Punkten $\zeta = x+iy$ der oberen Halbebene werden mit Hilfe der angegebenen Formel numerisch die Punkte z des rechteckigen Betriebskennfeldes bestimmt. Die Punkte z werden in der Tabelle als Urbildpunkte abgelegt, die Punkte $\zeta$ als Bildpunkte.

Beispiel 6

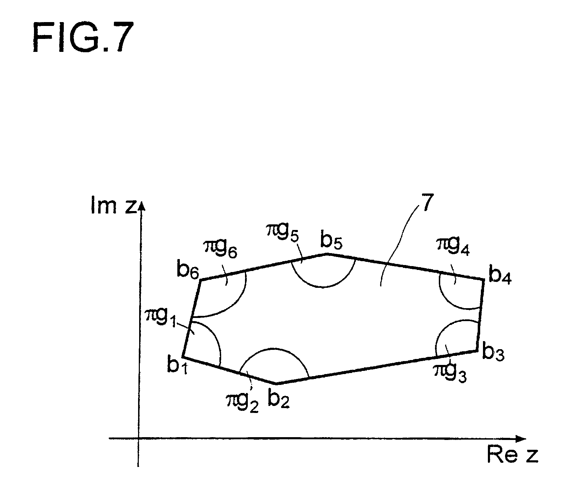

In diesem Beispiel wird Beispiel 5 auf ein allgemeines polygonales Kennfeld verallgemeinert. Fig. 7 zeigt ein solches Kennfeld 7, mit z. B. sechs Ecken $b_1$ bis $b_6$. Die Ecken eines allgemeinen n-eckigen Polygons seien als $b_1$ bis $b_n$, die Winkel als $\pi g_1$ bis $\pi g_n$ bezeichnet. Die Koordinatenachsen sind mit Re z und Im z bezeichnet und werden als reelle bzw. imaginäre Achse der komplexen Zahlenebene wie im vorhergehenden Beispiel 5 aufgefaßt. Eine Funktion, die die komplexe obere Halbebene auf ein Polygon mit den Winkeln $\pi g_1$ bis $\pi g_n$ abbildet, ist das sog. Christoffel-Schwarz-Integral

$$z = c_1 \int_0^\zeta (t-a_1)^{g_1-1}(t-a_2)^{g_2-1}...(t-a_n)^{g_n-1} dt + c_2,$$

wobei $c_1$ und $c_2$ komplexe Konstanten sind (Hurwitz und Courant, a.a.o., Seite 431 ff.). Die reellen Punkte $a_1$ bis $a_n$ sind dabei diejenigen Punkte, die von dieser Funktion auf die Ecken des Polygons $b_1$ bis $b_n$ abgebildet werden.

Für vorgegebene Eckpunkte $b_1$ bis $b_n$ kann man die Punkte $a_1$ bis $a_n$ mit numerischen Verfahren bestimmen.

Die angegebene Funktion ist die Umkehrfunktion der verfahrensgemäßen Abbildung eines polygonalen Betriebskennfeldes auf die obere Halbebene als Einheitsbereich. Mit ihrer Hilfe läßt sich ähnlich wie im Beispiel 5 eine Tabelle von Urbild- und Bildpunkten anlegen.

Beispiel 7

Im folgenden wird ein Beispiel für ein Verfahren zur Kontrolle des Betriebspunktes eines Gerätes oder einer aus mehreren Geräten bestehenden Anlage mit einem zwei- oder mehrdimensionalen Betriebsbereich gegeben, bei dem die Kontrolle des Betriebspunktes aufgrund der Lage des Bildes des Betriebspunktes erfolgt, das durch eine Abbildung, die nur einen Teilbereich des Betriebsbereiches auf einen Einheitsbereich abbildet, entsteht.

Es wird wieder ein beliebig geformtes zweidimensionales Betriebskennfeld 2 gemäß Fig. 2 betrachtet. Ein solches Kennfeld läßt sich mit ausreichender Genauigkeit durch ein geradliniges Polygon annähern. Dabei ist vorteilhaft, das Polygon so zu wählen, daß es ganz im Inneren des Kennfeldes liegt.

Die Kontrolle des Betriebspunktes und die Regelung eines Gerätes mit diesem beliebig geformten Kennfeld kann dann aufgrund der Lage des Bildes des Betriebspunktes erfolgen, das durch eine Abbildung, die das im Inneren des Betriebsbereiches gelegene Polygon auf die obere Halbebene abbildet, entsteht. Die Regelung erfolgt auf solche Weise, daß der Betriebspunkt unter allen Betriebsbedingungen im Inneren des Polygons liegt. Auf diese Weise ist auch sichergestellt, daß sich der Betriebspunkt unter allen Betriebsbedingungen im Inneren des eigentlichen Betriebskennfeldes befindet.

Vorteil der Annäherung des Betriebskennfeldes durch ein Polygon ist, daß Funktionen, die die obere Halbebene und ein Polygon aufeinander abbilden, gemäß Beispiel 6 in allgemeiner analytischer Form angegeben werden können.

Beispiel 8

In diesem Beispiel wird ein Verfahren zur Kontrolle eines Gerätes mit einem zweidimensionalen Betriebsbereich erläutert, bei dem die Kontrolle aufgrund der Lage des Bildes des Betriebspunktes erfolgt, das durch eine Abbildung, die den Betriebsbereich des zu regelnden Gerätes auf den Betriebsbereich eines anderen Gerätes abbildet, entsteht.

Dazu sei angenommen, daß der Betriebsbereich des zu regelnden Gerätes z.B. die in Fig. 2 gezeigte Form hat. Weiterhin sei angenommen, daß ein anderes Gerät existiert, dessen Betriebsbereich z. B. die in Fig. 6 gezeigte Form besitzt, und daß für dieses Gerät ein effizientes und sicheres Regelungsverfahren bekannt ist. Schließlich sei eine Transformation $t_1$, die das Betriebskennfeld 2 aus Fig. 2 auf einen Einheitsbereich abbildet, sowie eine Transforrnation $t_2$, die das Betriebskennfeld 6 aus Fig. 6 auf denselben Einheitsbereich abbildet, bekannt.

Eine Abbildung des Kennfeldes 2 auf das Kennfeld 6 läßt sich dann aus den Abbildungen $t_1$ und $t_2$ zusammensetzen: Die gewünschte Abbildung ist $t_{21}=t_2^{-1}t_1$.

Das Verfahren zur Kontrolle und Regelung des Gerätes mit dem Betriebskennfeld 2 kann nun folgendermaßen ablaufen: Zunächst wird der Betriebspunkt dieses Gerätes bestimmt und eine Abbildung des Betriebspunktes in das Kennfeld 6 durchgeführt. Die als bekannt vorausgesetzten Methoden zur Regelung des Gerätes mit dem Kennfeld 6 werden nun dazu verwendet, Parameter zu ermitteln, die einen Regelungseingriff für das zu regelnde Gerät mit dem Kennfeld 2 festlegen. Dies kann z.B. auf die oben beschriebene Weise durch die inverse Transformation eines aufgrund dieser Methoden erhaltenen Richtungsvektors im Kennfeld 6 der Fig. 6 erfolgen.

Ein Vorteil dieses Verfahrens ist es, daß die für das Gerät mit dem Kennfeld 6 angenommene effiziente und sichere Regelungsmethode auf ein Gerät mit einem beliebigen Kennfeld, wie z. B. dem Kennfeld 2, gleichermaßen angewendet werden kann. Auf diese Weise kann eine an sich bekannte Regelungsmethode für ein spezielles Gerät mit ebenem Kennfeld zur Regelung eines beliebigen Gerätes mit ebenem Kennfeld herangezogen werden.

**Patentansprüche**

1. Verfahren zur Überwachung oder Regelung eines Gerätes oder einer aus mehreren Geräten bestehenden Anlage (1000; 4000) mit einem zwei- oder mehrdimensionalen Betriebsbereich (2), **dadurch gekennzeichnet, dass** eine Abbildung des Betriebsbereiches (2) oder eines Teiles davon auf einen Einbeitsbereich (3; 5; 6; 7) oder auf einen Betriebsbereich eines anderen Gerätes und ein Betriebspunkt (B) oder Sollpunkt (S) des Betriebsbereiches (2), der mittels der Abbildung in einen Punkt im Einheitsbereich (3; 5) oder in dem Betriebsbereich des anderen ausgewählten Gerätes transformiert wird, zur Überwachung bzw. Regelung herangezogen werden.

2. Verfahren nach Anspruch 1 **dadurch gekennzeichnet, dass** einer oder mehrere Prozessparameter mittels der Abbildung oder der dazu inversen Transformation ermittelt werden.

3. Verfahren zur Überwachung eines Gerätes oder einer aus mehreren Geräten bestehenden Anlage (1000; 4000) nach Anspruch 1, enthaltend die Schritte

    - Bestimmung des Betriebspunktes (B) im Betriebsbereich (2);

    - Transformation des Betriebspunktes (B) mittels einer gespeicherten Abbildungsvorschrift für die Abbildung;

    - Ausgabe der Koordinaten des Bildes (B') des Betriebspunktes.

4. Verfahren zur Regelung eines Gerätes oder einer aus mehreren Geräten bestehenden Anlage (1000; 4000) nach Anspruch 1, enthaltend die Schritte

- Bestimmung des Betriebspunktes (B) im Betriebsbereich (2);

- Transformation des Betriebspunktes (B) mittels einer gespeicherten Abbildungsvorschrift für die Abbildung;

- Ermittlung von Parametern, die einen Regelungseingriff festlegen, anhand der Lage des Bildes (B') des Betriebspunktes;

- Ausführung des Regelungseingriffs.

5. Verfahren nach einem der Ansprüche 1 bis 5, **dadurch gekennzeichnet, dass** der Betriebsbereich (2) zweidimensional ist und dass die Abbildung ein Polygon, das den Betriebsbereich annähert, auf einen Einheitsbereich (3; 5) oder einen Betriebsbereich eines anderen. Gerätes abbildet.

6. Vorrichtung zur Überwachung oder Regelung eines Gerätes oder einer aus mehreren Geräten bestehenden Anlage (1000; 4000) mit einem zwei- oder mehrdimensionalen Betriebsbereich (2), **dadurch gekennzeichnet, dass** Mittel (1090, 1100, 1110; 4090, 4100, 4110) zur Bestimmung und Speicherung von Parametern vorhanden sind, die für die Durchführung einer Abbildung erforderlich sind, die den Betriebsbereich (2) oder einen Teil davon sowie einen Betriebspunkt (B) oder Sollpunkt (S) des Betriebsbereiches (2) in einen Einheitsbereich (3; 5) oder in einen Betriebsbereich eines anderen Gerätes abbildet und dass Mittel zur Durchführung der Abbildung vorhanden sind und dass Mittel zur Ausgabe der Koordinaten des Bildes des Betriebspunktes (B) oder zur Ausführung eines Regelungseingriffes vorhanden sind.

7. Vorrichtung nach Anspruch 6, **dadurch gekennzeichnet, dass** Mittel (1020; 4020) zur Durchführung der Abbildung eines beliebigen Punktes des Betriebsbereiches vorhanden sind.

8. Vorrichtung nach Anspruch 6 **dadurch gekennzeichnet, dass** Mittel (1030; 4030) zum Vergleich von Bildern von zwei im Betriebsbereich liegenden Punkten vorhanden sind, wobei der Vergleich in dem Einheitsbereich (3; 5) oder in dem Betriebsbereich des anderen Gerätes durchgeführt wird.

9. Vorrichtung nach Anspruch 6 **dadurch gekennzeichnet, dass** Mittel (1030; 4030) zum Vergleich eines Bildes eines Punktes, der im Betriebsbereich (2) liegt, mit wenigstens einer Linie (301; 501) in dem Einheitsbereich (3; 5) oder in dem Betriebsbereich des anderen Gerätes vorhanden sind.

10. Vorrichtung nach Anspruch 6 **dadurch gekennzeichnet, dass** Mittel (1050; 4050) zur Ermittlung eines oder mehrerer Prozessparameter mittels der. Abbildung des Betriebsbereiches auf den Einheitsbereich oder auf den Betriebsbereich des anderen Gerätes vorhanden sind.

11. Vorrichtung nach Anspruch 6, **dadurch gekennzeichnet, dass** sie

- ein erstes Rechenmodul (1140; 4140) zur Transformation eines Sollpunktes (S) in einen Punkt (S') des Einheitsbereiches (3, 5) oder des Betriebsbereiches des anderen Gerätes;

- eine Meßeinheit (1010; 4010) zur Bestimmung der Lage des Betriebspunktes (B);

- ein zweites Rechenmodul (1020; 4020) zur Transformation des Betriebspunktes in einen Punkt des Einheitsbereiches (3; 5) oder des anderen Gerätes;

- eine Vergleichseinheit (1030; 4030), die den transformierten Betriebspunkt (B') mit dem transformierten Sollpunkt oder mit mindestens einer Grenz- oder Regellinie (301; 501) des transformierten Betriebsbereiches (3; 5) vergleicht;

- einer Kontrolleinheit (1040; 4040) zur Bestimmung der für die Regelung erforderlichen Parameter

- sowie eine Ausführungseinheit (1060; 4060) zur Umsetzung der zur Regelung erforderlichen Handlungen

enthält.

## EP 1 163 555 B1

**Claims**

1. A method for monitoring or controlling an appliance or a system (1000; 4000) comprising a number of appliances, having a two-dimensional or multidimensional operating envelope (2), wherein the operating envelope (2), or a part of it, is mapped onto a unit domain (3; 5; 6; 7) or onto an operating envelope of another appliance and an operating point (B) or set point (S) in the operating envelope (2), which is transformed by means of the map to a point in the unit domain (3; 5) or in the operating envelope of the other selected appliance, for monitoring or control.

2. The method as claimed in claim 1, wherein one or more process parameters are determined by means of the map, or the inverse transformation with respect to it.

3. The method for monitoring an appliance or a system (1000; 4000) comprising a number of appliances as claimed in claim 1, containing the following steps:

   - determination of the operating point (B) in the operating envelope (2);
   - transformation of the operating point (B) by means of a stored map rule for the map;
   - outputting the co-ordinates of the image (B') of the operating point.

4. The method for controlling an appliance or a system (1000; 4000) comprising a number of appliances as claimed in claim 1, containing the following steps:

   - determination of the operating point (B) in the operating envelope (2);
   - transformation of the operating point (B) by means of a stored map rule for the map;
   - determination of parameters which define a control action, on the basis of the position of the image (B') of the operating point;
   - carrying out the control action.

5. The method as claimed in one of claims 1 to 4, wherein the operating envelope (2) is two-dimensional, and wherein the map maps a polygon, which is similar to the operating envelope, onto a unit domain (3; 5) or an operating envelope of another appliance.

6. An apparatus for monitoring or controlling an appliance or a system (1000; 4000) comprising a number of appliances, having a two-dimensional or multidimensional operating envelope (2), wherein means (1090, 1100, 1110; 4090, 4100, 4110) are provided for determining and storing parameters which are required to produce a map which maps the operating envelope (2), or a part of it, and an operating point (B) or set point (S) in the operating envelope (2) into a unit domain (3; 5) or into an operating envelope of another appliance, and wherein means are provided for producing the map, and wherein means are provided for outputting the co-ordinates of the image of the operating point (B) or for carrying out a control action.

7. The apparatus as claimed in claim 6, wherein means (1020; 4020) are provided for producing the map for any desired point in the operating envelope.

8. The apparatus as claimed in claim 6, wherein means (1030; 4030) are provided for comparing images of two points located in the operating envelope, with the comparison being carried out in the unit domain (3; 5) or in the operating envelope of the other appliance.

9. The apparatus as claimed in claim 6, wherein means (1030; 4030) are provided for comparing an image of a point which is located in the operating envelope (2) with at least one line (301; 501) in the unit domain (3; 5) or in the operating envelope of the other appliance.

10. The apparatus as claimed in claim 6, wherein means (1050; 4050) are provided for determining one or more process parameters by means of the map of the operating envelope onto the unit domain or onto the operating envelope of the other appliance.

11. The apparatus as claimed in claim 6, wherein said apparatus contains

    - a first computation module (1140; 4140) for transformation of a set point (S) to a point (S') in the unit domain (3, 5) or in the operating envelope of the other appliance;

- a measuring unit (1010; 4010) for determining the position of the operating point (B);
- a second computation module (1020; 4020) for transformation of the operating point to a point in the unit domain (3; 5) or of the operating envelope of the other appliance;
- a comparison unit (1030; 4030), which compares the transformed operating point (B') with the transformed set point or with at least one bound or control line (301; 501) of the transformed operating envelope (3; 5);
- a monitoring unit (1040; 4040) for determining the parameters required for control,
- and an execution unit (1060; 4060) for carrying out the operations required for control.

**Revendications**

1. Procédé de surveillance ou de régulation d'un appareil ou d'une installation (1000 ; 4000) formée de plusieurs appareils, avec un plage de fonctionnement (2) bi-ou multidimensionnelle, **caractérisé en ce qu'**une représentation de la plage de fonctionnement (2) ou d'une partie de celle-ci, sur une plage unitaire (3 ; 5 ; 6 ; 7) ou sur une plage de fonctionnement d'un autre appareil, et un point de fonctionnement (B) ou un point de consigne (S) de la plage de fonctionnement (2), qui est transformée, à l'aide de la représentation, en un point dans la plage unitaire (3 ; 5) ou dans la plage de fonctionnement de l'autre appareil sélectionné, sont utilisé(e)s pour la surveillance et/ou la régulation.

2. Procédé selon la revendication 1, **caractérisé en ce qu'**un ou plusieurs paramètres de processus sont déterminés, à l'aide de la représentation ou de la transformation inverse de celle-ci.

3. Procédé de surveillance d'un appareil ou d'une installation (1000 ; 4000) formée de plusieurs appareils selon la revendication 1, comprenant les étapes consistant à :

    - déterminer le point de fonctionnement (B) dans la plage de fonctionnement (2) ;
    - transformer le point de fonctionnement (B), à l'aide d'une prescription de représentation mémorisée pour la représentation ;
    - éditer les coordonnées de l'image (B') du point de fonctionnement.

4. Procédé de régulation d'un appareil ou d'une installation (1000 ; 4000) formée de plusieurs appareils, selon la revendication 1, consistant les étapes consistant à :

    - déterminer le point de fonctionnement (B) dans la plage de fonctionnement (2) ;
    - transformer le point de fonctionnement (B), à l'aide de la prescription de représentation mémorisée pour la représentation ;
    - déterminer des paramètres fixant une intervention de la régulation, à l'aide de la position de l'image (B) du point de fonctionnement ;
    - exécuter l'intervention de régulation.

5. Procédé selon l'une des revendications 1 à 4, **caractérisé en ce que** la plage de fonctionnement (2) est bidimensionnelle et que la représentation est un polygone, qui illustre de façon approchée la plage de fonctionnement, sur une plage unitaire (3 ; 5) ou une plage de fonctionnement d'un autre appareil.

6. Dispositif de surveillance ou de régulation d'un appareil ou d'une installation (1000 ; 4000) formée de plusieurs appareils, avec une plage de fonctionnement bi-ou multidimensionnelle, **caractérisé en ce que** des moyens (1090, 1100, 1110 ; 4090, 4100, 4110) sont prévus pour déterminer et mémoriser des paramètres, nécessaires pour exécuter une représentation, qui reproduit la plage de fonctionnement (2) ou une partie de celle-ci, ainsi qu'un point de fonctionnement (B) ou un point de consigne (S) de la plage de fonctionnement (2) dans une plage unitaire (3 ; 5) ou dans une plage de fonctionnement d'un autre appareil, et **en ce que** des moyens sont prévus pour exécuter la représentation, et **en ce que** des moyens d'édition des coordonnées de l'image du point de fonctionnement (2) ou d'exécution de l'intervention de la régulation sont prévus.

7. Dispositif selon la revendication 6, **caractérisé en ce que** des moyens (1020 ; 4020) sont prévus pour exécuter la représentation d'un point quelconque de la plage de fonctionnement.

8. Dispositif selon la revendication 6, **caractérisé en ce que** des moyens (1030; 4030) sont prévus pour comparer des images de deux points situés dans la plage de fonctionnement, la comparaison étant effectuée dans la plage unitaire (3 ; 5) ou dans la plage de fonctionnement de l'autre appareil.

9. Dispositif selon la revendication 6, **caractérisé en ce que** des moyens (130 ; 4030) sont prévus pour comparer une image d'un point, situé dans la plage de fonctionnement (2), à au moins une ligne (301 ; 501) situé dans la plage unitaire (3 ; 5) ou dans la plage de fonctionnement de l'autre appareil.

10. Dispositif selon la revendication 6, **caractérisé en ce que** des moyens (1050 ; 4050) sont prévus pour déterminer un ou plusieurs paramètres de processus, à l'aide de la représentation de la plage de fonctionnement sur la plage unitaire ou sur la plage de fonctionnement de l'autre appareil.

11. Dispositif selon la revendication 6, **caractérisé en ce qu'**il comprend :

   - un premier module de calcul (1140; 4140) pour effectuer la transformation d'un point de consigne (S) en un point (S') de la plage unitaire (3,5) ou de la plage de fonctionnement de l'autre appareil ;
   - une unité de mesure (1010 ; 4010) pour déterminer la position du point de fonctionnement (B) ;
   - une deuxième module de calcul (1020 ; 4020) pour effectuer la transformation du point de fonctionnement en un point de la plage unitaire (3 ; 5) ou de l'autre appareil ;
   - une unité de comparaison (130 ; 4030) qui compare le point de fonctionnement (B') transformé au point de consigne transformé ou à au moins une ligne de limite ou de régulation (301 ; 501) de la plage de fonctionnement (3 ; 5) transformée ;
   - une unité de contrôle (1040 ; 4040) pour déterminer les paramètres nécessaires à la régulation ;
   - ainsi qu'une unité d'exécution (1060 ; 4060) pour la conversion des traitements ou interventions nécessaires à l'intervention.

# FIG.1

# FIG.2

# FIG.3

# FIG.4

# FIG.5

# FIG.6

# FIG.7